# EUROPÄISCHE PATENTANMELDUNG

(11) **EP 2 990 321 A1**
(43) Veröffentlichungstag der Anmeldung: **02.03.2016**
(21) Anmeldenummer: 15460056.3
(22) Anmeldetag: 01.09.2015
(51) Int. Cl.: B62M 1/26, B62K 3/00

(54) **TRETROLLER MIT EINEM WIPPENDEN TRITTBRETT**

(30) Priorität: 01.09.2014 PL 12335614
(71) Anmelder: Baczkowski, Roman Marcin, 54-129 Wroclaw (PL); Baczkowski, Alicja, 54-129 Wroclaw (PL)
(72) Erfinder: Baczkowski, Roman Marcin, 54-129 Wroclaw (PL); Baczkowski, Alicja, 54-129 Wroclaw (PL)

(57) **Zusammenfassung**

Ziel dieser Arbeit ist es einen Roller zu konstruieren, dessen Antrieb sich durch eine konstante Größe des Antriebsmomentes kennzeichnet, das auf das Antriebsrad, also das Rad des Rollers übertragen wird. Der konstruierte Mechanismus ermöglicht es einem Benutzer des Rollers, eines Einrad- oder Zweiradrollers, sich automatisch mit erheblichen, sogar sportlichen Geschwindigkeiten auf den Straßen zu bewegen. Rahmen 3 mit einer optimalen Form ist durch die Gabel 2 auf dem Vorderrad 1 und die Gabel 13 auf dem Hinterrad 12 trennbar befestigt. Der bewegliche Rahmen 5 wird durch die Buchsen 5.4 mit Bolzen 6.1, die Auflagerbuchse 6.2 des Rahmenauflagers 6 steif, optimal und symmetrisch auf dem Rahmen 3 aufgesetzt. Der Ort der Anordnung der Buchse 5.4 und damit die Auswahl der Rahmenlängen 5.1 und 5.2 ist frei wählbar. Auf der Buchse 5.4 des Rahmens 5 kann ein Lager 5.5 aufgesetzt werden. Der Rahmen 5 besteht in Fahrtrichtung des Rollers aus einem rechten Rahmen 5.1, linken Rahmen 5.2, die von oben mit einem Trittbrett 4 vorteilhaft aus Holz hergestellt, verbaut werden. Die Welle 8.3 erzwingt durch die Kurbelwelle 8 des Zahnrades 9 die Drehbewegung, die dann wiederum auf die Kette 10 übertragen wird, die das Zahnrad 11 mit der Nabe 11.1 auf dem Rad 12 bewegt.

## Beschreibung

Gegenstand der Erfindung ist ein Roller mit einem wippenden Trittbrett, der mit der Kraft der menschlichen Muskeln angetrieben wird.

Bekannt und allgemein verwendet werden Roller mit einem Antriebsmechanismus, der zum Beispiel im Gebrauchsmuster P.328440 pt. beschrieben ist. Dieser Mechanismus löst das Problem, einen solchen Antriebsmechanismus für muskelkraftbetriebene Fahrzeuge zu konstruieren, der eine ständige Drehbewegung mit einem konstanten Drehmoment sicherstellt. Bei einer solchen Konstruktion werden zwei Freiläufe 2 und 3 eingesetzt, die entsprechend von der linker und rechter Seite des Antriebsrades 1 angeordnet sind, und zwei Trittbretter 6, 7, die sich mit einer Hin- und Herbewegung auf einer Gerade bewegen. Die Trittbretter 6, 7 sind miteinander und mit den Freiläufen 2, 3 durch Rollen 4, 5 so verbunden, dass beim Drücken mit einer Kraft F auf das rechte Trittbrett 6, der rechte Freilauf 2 das Antriebsrad 1 antreibt, und in derselben Zeit der linke Freilauf 3 samt linken Trittbrett 7 sich in entgegengesetzter Richtung verschiebt. Beim Drücken auf das linke Trittbrett 7 verläuft der Zyklus genauso, nur mit diesem Unterschied, dass der linke Freilauf 3 das Antriebsrad 1 antreibt, und der rechte Freilauf 2 sich in entgegengesetzter Richtung zum Antriebsrad 1 dreht.

Aus der polnischen Erfindungsmeldung mit der Nummer W. 348088 ist ein Roller bekannt, der mit einem Antriebsmechanismus mit einem Pedal ausgestattet ist, das wippend am Trittbrett des Rollers befestigt ist. Der Roller besitzt eine in der Nabe des Hinterrades platzierte Richtungskupplung, die durch biegsames Zugmittel in Form von einer Gelenkkette mit dem Pedal verbunden ist, und einen Laufwagen, der in den am Trittbrett befestigten Führungen platziert ist. Das wippende Pedal ist dabei an einer Stelle drehbar und direkt mit dem Trittbrett verbunden und an einer anderen Stelle ist es drehbar mit dem Laufwagen verbunden, der sich in den Führungen mit einer Hin- und Herbewegung bewegt.

Aus der polnischen Beschreibung der Erfindung PL 192050 ist ein Hebelantrieb für fahrradartige Fahrzeuge bekannt, der unabhängig auf beiden Seiten des Fahrzeuges auf das Hinterrad wirkt, das auf beiden Seiten mit Zahnscheiben ausgestattet ist. Der Antrieb besitzt Hebel mit Querstücken, die auf der Achse befestigt sind, die sich im unteren Teil des Fahrzeugrahmens befindet. Die Enden der Querstücke sind mit den Enden der gleichen Abschnitte der Fahrradketten verbunden, die die Zahnscheiben beschriften, wobei die oberen Teile der Querstücke durch Zugfeder der Hebel mit unteren Teilen des Fahrzeugrahmens verbunden sind. Der vorstehend beschriebener Antrieb ermöglicht eine unabhängige Bewegung der beiden Hebel, die das Rad des fahrradartigen Fahrzeuges antreiben.

Der hier vorgestellter Stand der Technik in dieser Angelegenheit, also der Einsatz eines muskelkraftbetriebenes Antriebes, zeigt die Vielfalt der Elemente die dabei miteinander zusammenarbeiten müssen. Zu diesen Elementen gehören Rollen, Pedale, biegsame Zugmittel in Form einer Gelenkkette oder eine Vielzahl von Zugfedern mit anderen Elementen oder Hebeln. Eine zu große Elementenanzahl verursacht Störungen im Mechanismus, der die Bewegung des Fahrzeugs auf den Untergrund überträgt. Montageschwierigkeiten und die damit verbundenen Produktionskosten und auch der Preis eines hergestellten Rollers können als Nachteil betrachtet werden.

Die Erfindung betrifft einen Antriebsmechanismus in einem Roller, dessen wesentliches Merkmal ein zentral angeordnetes wippendes Trittbrett ist. Das wippende Trittbrett überträgt wiederum mit Hilfe eines Kurbelmechanismus den Antrieb auf das Hinterrad des Rollers. So ein Mechanismus ermöglicht es einem Benutzer, der mit beiden Beinen auf dem Trittbrett steht, sich automatisch mit erheblichen, sogar sportlichen Geschwindigkeiten zu bewegen.

Vorne am Hauptrahmen **3** ist eine Drehgabel **2** eingesetzt, in die das Rad **1** angeschraubt ist. Im mittleren Teil des Rahmens **3** ist ein beweglicher Rahmen **5** befestigt, der aus Trittbrett **4** und Armen **5.1** und **5.2,** die miteinander mit Verbindern **5.3** verbunden sind, besteht. Außerdem sind in den Armen **5.1** und **5.2** dauerhaft Buchsen **5.4** befestigt, zwischen denen sich der Auflager **6** des beweglichen Rahmens befindet. Der bewegliche Rahmen **5** und der Rahmen **3** sind mit Hilfe des Bolzens **6.1,** der durch die Buchse **6.2** des Auflagers verläuft, verbunden. Am Arm **5.2** ist mit Hilfe des Bolzens **7.1** die Kurbelstange **7** befestigt, deren anderes Ende mit dem Kurbelwellenarm **8.1** mit Hilfe des Bolzens **8.2** verbunden ist. Der Kurbelwellenarm **8.1** ist auf der Kurbelwelle **8** aufgesetzt. Die Kurbelwelle **8** ist mit einem Klinkenmechanismus **8.3** ausgestattet. Auf dem anderen Ende der Kurbelwelle **8** ist ein Zahnrad **9** befestigt, das durch eine Fahrradkette **10** mit dem kleineren Zahnrad **11** verbunden ist, das an der Nabe **11.1** des hinteren Antriebsrades **12** befestigt ist. Das Hinterrad **12** ist am Rahmen **3** mit Hilfe einer hinteren Gabel **13** befestigt.

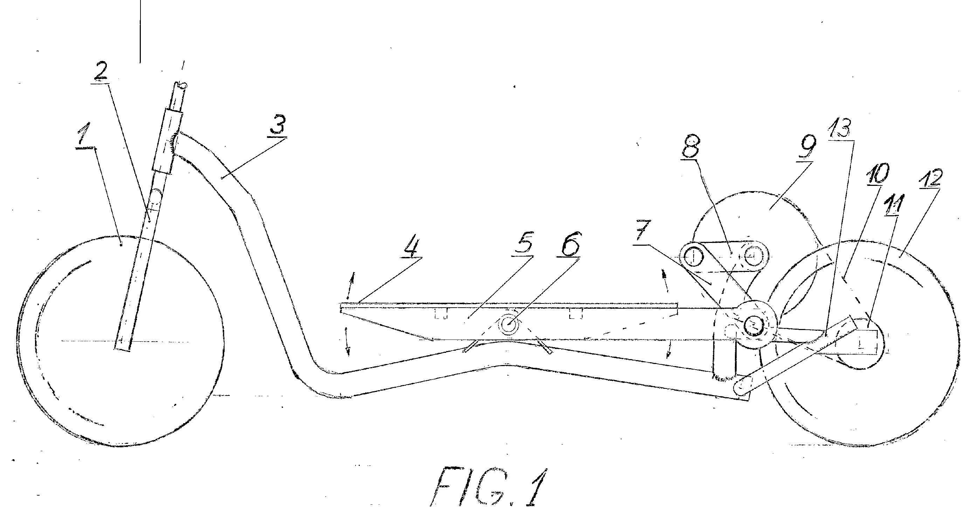

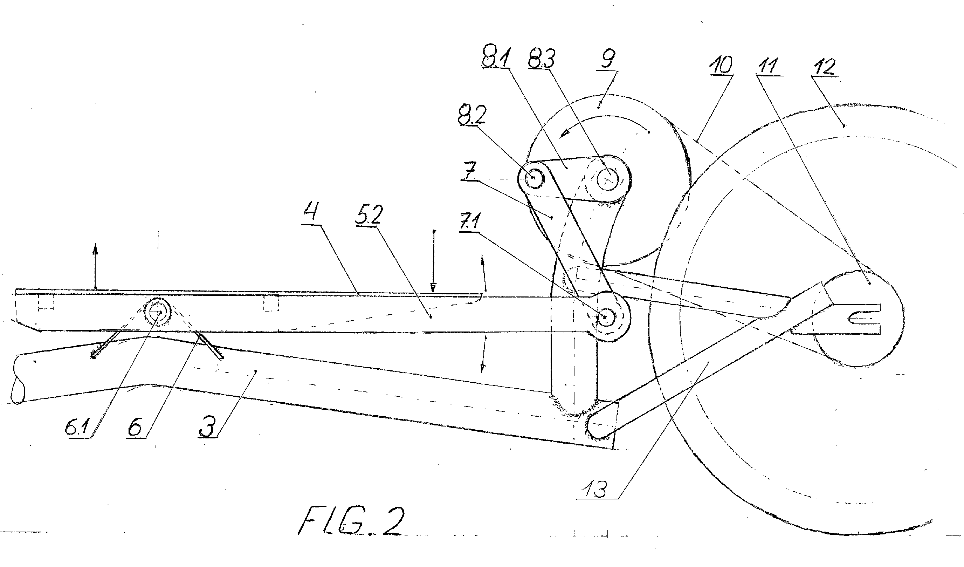

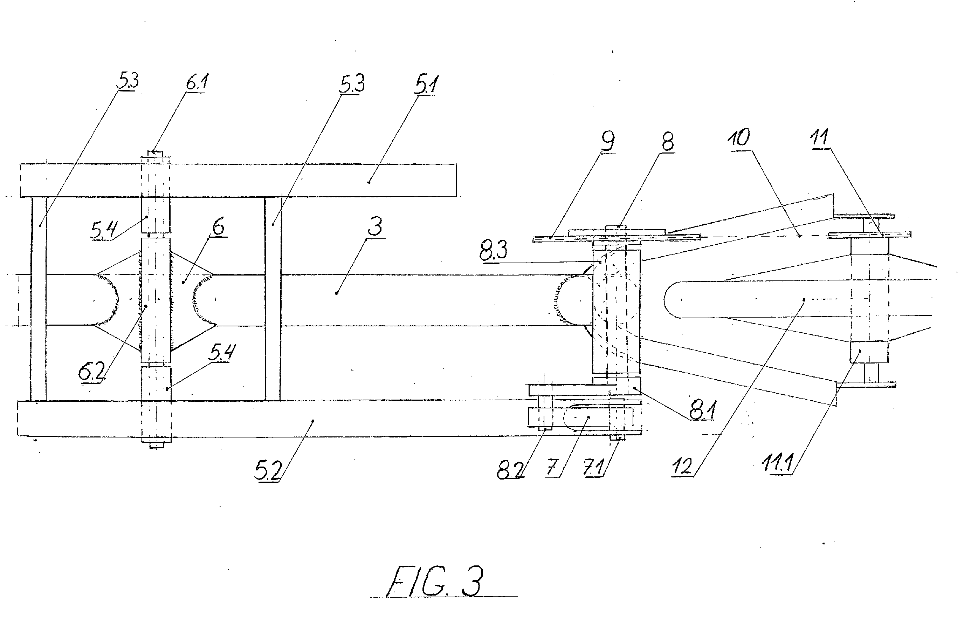

## Patentansprüche

1. Roller ausgestattet mit einem wippenden Trittbrett, Lenker sowie Vorder- und Hinterrad. Kennzeichnend für diesen Roller ist, dass er einen Rahmen (3), einen beweglichen Rahmen (5) und ein Trittbrett (4) besitzt. Der bewegliche Rahmen (5) besteht aus einem rechten Arm (5.1) und einem linken Arm (5.2), die aus Metallprofilen mit einem quadratischen Querschnitt ausgeführt sind.
Arme (5.1 und 5.2) sind mit Hilfe von zwei angeschweißten Verbindern (5.3) verbunden, wobei der Bolzen (6.1) durch zwei Buchsen (5.4) verläuft, die zentral an die Arme (5.1 und 5.2) in der Mitte zwischen den zwei Verbindern (5.3) angeschweißt sind. Linker Arm (5.2) am Hinterrad (12) ist mit Hilfe des Bolzens (7.1) mit der Kurbelstange (7) verbunden. Das andere Ende der Kurbelstange ist durch Bolzen (8.2) mit dem Kurbelwellenarm (8.1) verbunden. In der Kurbelwelle (8) befindet sich ein Klinkenmechanismus (8.3), und auf dem anderen Ende der Kurbelwelle (8.1) ist ein Zahnrad (9) aufgesetzt, das durch eine Fahrradkette (10) mit dem kleinen Zahnrad des Hinterrades verbunden ist. Beweglicher Rahmen (5) ist dabei mit dem Rahmen (3) durch Metallauflager (6) verbunden, die an die Buchse (6.2), durch die der Bolzen (6.1) verläuft, angeschweißt sind. Das Hinterrad (12) ist am Rahmen (3) mit Hilfe einer hinteren Gabel (13) befestigt.
